# EUROPEAN PATENT APPLICATION

(11) **EP 4 383 416 A2**
(43) Date of publication of application: **12.06.2024**
(21) Application number: 23213910.5
(22) Date of filing: 04.12.2023
(51) Int. Cl.: H01M 50/209, H01M 50/211, H01M 50/213, H01M 50/247, H01M 50/262

(54) **BATTERY PACK ASSEMBLY**

(30) Priority: 06.12.2022 US 202263430598 P
(71) Applicant: Milwaukee Electric Tool Corporation, Brookfield, WI 53005 (US)
(72) Inventor: CASTAÑOS, Carmen J., Milwaukee, 53202 (US); SILHA, Wyatt R., Milwaukee, 53210 (US); WHEALON, John L., West Bend, 53095 (US); SCHENK, Alexander R., Elkhorn, 53121 (US); ZIDEL, Eli M., Milwaukee, 53211 (US); MEYER, Zachery, Hartland, 53029 (US); MARX, John G., Hartford, 53027 (US)
(74) Representative: Forresters IP LLP

(57) **Abstract**

A battery pack is disclosed and includes a core case, an outer housing, and a fastener. The core includes an interior cavity and at least two lobes. The lobes project outwardly away from the interior cavity. The outer housing surrounds the core case and includes a set of protrusions that fit between the two lobes of the core case. The fastener extends through the lobes and protrusion.

## Description

### CROSS-REFERENCE TO RELATED APPLICATIONS

The present application claims priority to U.S. provisional application number 63/430,598, filed December 6, 2022, the entire contents of which are incorporated by reference herein.

### FIELD

The present disclosure relates to battery packs, and more particularly to battery packs configured to interface with power tools.

### BACKGROUND

Typically, a battery pack for a power tool will include a plurality of battery cells. During operation, the battery cells may become susceptible to damage if not properly secured and protected. One method of protecting the battery cells is providing an additional battery cell casing disposed within the outer housing of the battery pack. The battery cell casing should be secured to prevent movement of the battery cells within the outer housing.

### SUMMARY

The disclosure provides, in one independent aspect, a battery pack that includes a core case, an outer housing, and a fastener. The core includes an interior cavity and at least two lobes. The lobes project outwardly away from the interior cavity. The outer housing surrounds the core case and includes a set of protrusions that fit between the two lobes of the core case. The fastener extends through the lobes and protrusion.

The disclosure provides, in another independent aspect, a battery pack with a core case, an outer housing, and a fastener. The core case defines an internal cavity and an outwardly projecting lobe with a hole. The outer housing surrounds the core case and includes an inward-facing protrusion. The protrusion has a hole that is aligned with the hole of the lobe. The outer housing also includes a guide rail used for mounting the battery pack to an electric device. The fastener extends through the hole of the protrusion and the hole of the lobe in a similar direction to the guide rail.

The disclosure also provides, in another independent aspect, a battery pack housing with a base, a band, and a bar. The base has an outer surface and an inner surface and includes a first material. The band is molded into the outer surface of the base and has several projections formed on the inner surface of the base. The bar is molded into the inner surface of the base and contacts the band. The bar and band include a different material than the first material.

The disclosure also provides, in another independent aspect, a battery pack comprising:
a core case defining an interior cavity for receiving a plurality of cells, the core case including at least two lobes, each lobe projecting outwardly away from the interior cavity;
an outer housing surrounding the core case and mounted to the core case, the outer housing including an inward-facing protrusion disposed between the two lobes; and
a fastener extending through two lobes and the inward-facing protrusion.

Each the lobes of the core case may define a hole receiving the fastener therethrough.

The outer housing may define a hole receiving the fastener therethrough.

The hole defined in the outer housing may be concentric with the holes of two lobes.

The outer housing may further include another inward-facing protrusion disposed between the two lobes.

The outer housing may further include a guide rail, the guide rail configured to mount the battery pack to an electric device.

The fastener may extend parallel to the guide rail.

The outer housing may include a top cover and bottom cover coupled together.

The top cover of the outer housing may partially extend over a side of the core case.

The disclosure also provides, in another independent aspect, a battery pack comprising:
a core case defining an interior cavity for receiving a plurality of cells, the core case including a lobe projecting outwardly away from the interior cavity, the lobe including a hole defined therein;
an outer housing surrounding the core case and mounted to the core case, the outer housing including:
   an inward-facing protrusion including a hole defined therein, the hole of the protrusion aligned with the hole of the lobe, and
   a guide rail for mounting the battery pack to an electric device; and
a fastener extending through the hole of the protrusion and the hole of the lobe in a direction along the guide rail.

The core case may include a plurality of lobes projecting away from the interior cavity.

The outer housing may further include an additional inward-facing protrusion including a hole defined therein aligned with the hole of the lobe.

The core case may further include a second lobe projecting outwardly away from the interior cavity, and the outer housing may further include another inward-facing protrusion disposed between the lobe and the second lobe.

The lobe may be formed as a unitary piece of the core case.

The inward-facing protrusion may be formed as a unitary piece of the outer housing.

The outer housing may include a top cover, the top cover may include the inward-facing protrusion, the inward-facing protrusion being a top inward-facing protrusion, and the lobe may be a top lobe of the core case.

The outer housing may further include a bottom cover, the bottom cover including a bottom inward-facing protrusion, including a bottom hole defined therein, and the core case may further include a bottom lobe projecting outwardly away from the interior cavity, the bottom lobe including a bottom hole defined therein.

The bottom cover may extend over a majority of a height of the core case.

The fastener may extend transverse to the height of the core case.

The disclosure also provides, in another independent aspect, a battery pack comprising:
an outer housing defining a base having an outer surface and an inner surface, the outer house including a first material;
a band molded into the outer surface of the base, the band including a plurality of projections formed on the inner surface; and
a bar formed onto the inner surface of the base, the bar integrally formed with the band; wherein the band and the bar includes a second material, the second material different than the first material.

### BRIEF DESCRIPTION OF THE DRAWINGS

FIG. 1 is a perspective view of a battery pack, according to one construction.
FIG. 2 is a perspective view of the core case of the battery pack in FIG. 1, with the outer housing being transparent.
FIG. 3 is a perspective cross-sectional view of a section taken from line 3-3 in FIG. 1.
FIG. 4 is a perspective cross-sectional view of a section taken from line 5-5 in FIG. 1.
FIG. 5 is a perspective view of a bottom cover of a battery pack according to another construction.

### DETAILED DESCRIPTION

Before any independent constructions of the present disclosure are explained in detail, it is to be understood that the present disclosure is not limited in its application to the details of construction and the arrangement of components set forth in the following description or illustrated in the following drawings. The present disclosure is capable of other independent constructions and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter and equivalents thereof as well as additional items. Use of "consisting of" and variations thereof as used herein is meant to encompass only the items listed thereafter and equivalents thereof.

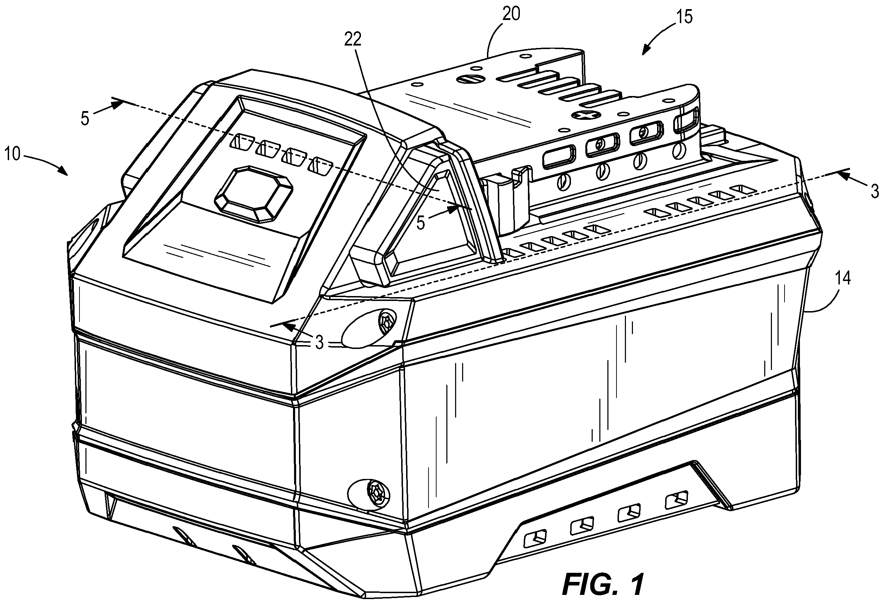

FIGS. 1-2 illustrate an embodiment of a battery pack 10. The battery pack 10 is configured to power a variety of power tools and be charged by a charger. The battery pack 10 includes a core case 12, an outer housing 14, and a plurality of fasteners 16. In the current embodiment, the outer housing 14 of the battery pack 10 includes a battery pack interface 15 defining a plane along which a power tool or other appropriate electrical devices may be mounted. The battery pack interface 15 includes a plurality of terminals 18 located on a guide rail 20 configured to releasably couple and electronically connect the battery pack 10 to the corresponding electric device. The battery pack 10 further includes a release button 22 which is configured to detach the battery pack 10 from the connected electric device.

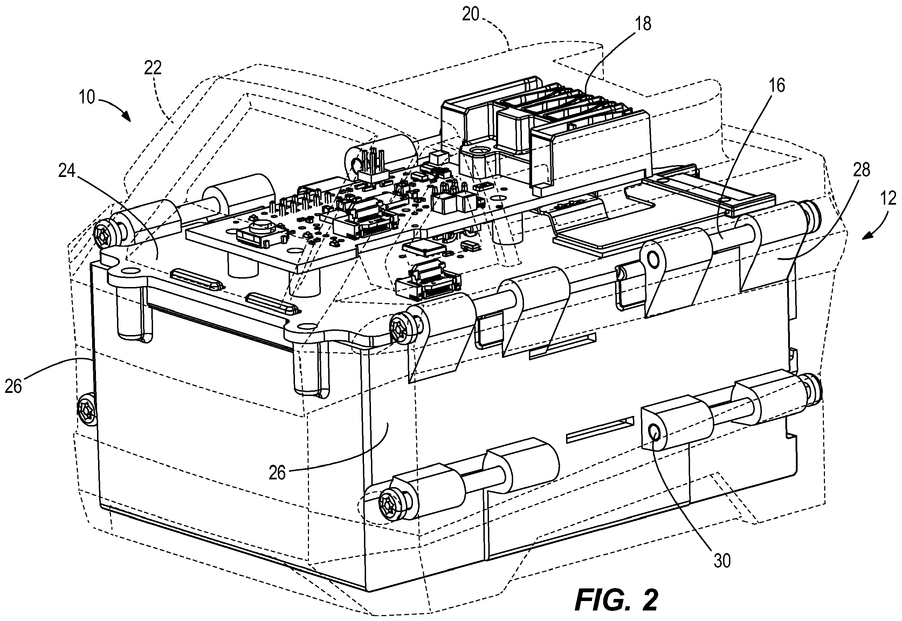

With specific reference to FIG. 2, the core case 12 of the battery pack 10 has a generally box-like shape and is used to house a plurality of battery cells within an interior cavity defined therein. In the current embodiment, three side walls corroborate with a front plate (not shown) and a circuit board to enclose the battery cells. In the illustrated embodiment, each of two opposing walls 26 respectively has a plurality of lobes 28 extending outwardly away from the cavity in pairs. In other embodiments, the core case 12 only includes a single lobe 28. Each lobe 28 has a lobe hole 30 disposed within and each lobe hole 30 has a circular shape. In some embodiments, the lobes 28 may extend from adjacent walls instead of or in addition to extending outwardly from opposing walls. In some embodiments, each lobe 28 may be integrally formed as a unitary piece of the core case 12.

With continued reference to the illustrated embodiment of FIG. 2, each lobe 28 receives a fastener 16 within the lobe holes 30. In the illustrated embodiment, the fastener 16 is passed through the outer housing 14 and a respective lobe 28 in a direction parallel to the plane defined by the battery pack interface 15. Said another way, the fastener 16 extends transverse to the height of the core case 12. For example, in the illustrated embodiment, the plurality of fasteners 16 extend through the outer housing 14 and the lobes 28 between a front side and an opposing back side of the core case 12 in a direction parallel to the guide rail. In the present embodiment, at least one fastener 16 is partially disposed underneath the release button 22.

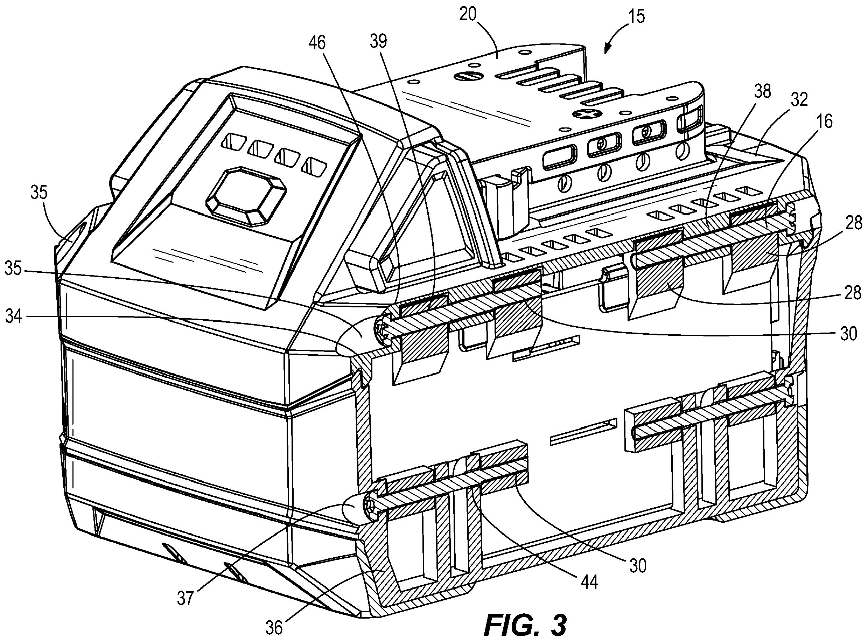

With reference to FIG. 3, the current embodiment of the outer housing 32 of the battery pack 10 includes of a top cover 34 and a bottom cover 36. The top cover 34 includes the battery pack interface 15, and the release button 22 and is configured to releasably couple the battery pack 10 with an appropriate electric device such as a power tool or charger. Additionally, the top cover 34 extends over a front side of the core case 12 allowing the fastener 16 to extend through the outer surface of the top cover 34. Stated another way, the top cover 34 can have a bucket-shape. Also disposed within the top cover 34 is a plurality of top outer holes 35. In the current embodiment, the outer holes are recessed to protect the head of the respective inserted fastener 16.

The top cover 34 further includes a plurality of top inward-facing protrusions 38, the protrusions 38 each having a top protrusion hole 39 disposed within. In the current embodiment, the top protrusions 38 extend between the pair of lobes 28 and span the entire width defined therebetween. In current embodiment, each protrusion hole 39 is respectively concentric with the lobe hole 30 of the two surrounding lobes 28. Other embodiments may have fewer protrusions, and the protrusions may not span the entire width between the pair of lobes 28.

The bottom cover 36 may also have a bucket-like shape that extends over the front side of the core case 12. In some embodiments, the top cover 34 and the bottom cover 36 may overlap such that the top cover 34 and bottom cover 36 may be coupled together. In some embodiments, the top cover 34 and the bottom cover 36 may be coupled together through a mutual coupling to the core case 12. In some embodiments, the top cover 34 and the bottom cover 36 may be coupled together by overlapping fasteners 16. In yet other embodiments, the top cover 34 and the bottom cover 36 may be coupled together by the opposing forces of opposing fasteners 16 inserted into both the top cover 34 and the bottom cover 36.

Returning to the bottom cover 36, the bottom cover 36 may also include a plurality of bottom outer holes 37. In the current embodiment, the bottom outer holes 37 are recessed to protect the head of the respective inserted fastener 16. The bottom cover 36 further includes a plurality of bottom inward-facing protrusions 41, the bottom protrusions 41 each having a bottom protrusion hole 44 disposed within. In the current embodiment, the two bottom protrusions 41 extend between each pair of bottom lobes 28. Each of the bottom protrusions 41 in the current embodiment are adjacent to their respective bottom lobe 28 such that the space between the bottom protrusions 41 added to the width of the protrusions make up the entirety of the space between the two lobes 28. The bottom protrusion holes 44 of the current embodiment are also respectively concentric with the lobe holes 30 of the two surrounding lobes 28. The configuration of the bottom lobes 28 and the bottom protrusion holes 44 may also be reflected in top protrusions 38 and the top lobes 28. In the illustrated embodiment, the fastener 16 is inserted through a hole defined by a corresponding alignment of the concentric lobe holes 30 and the protrusion holes 39, 44.

Additionally, in the illustrated embodiment, the width of the gap between the lobes 28 is similar between the protrusions 38 of the top cover 34 and bottom cover 36. Other embodiments may not span the entire width between the pair of lobes 28. The width between lobes 28 may also be different between different pairs of lobes 28. In yet other embodiments, the bottom protrusions 41 may align with the top protrusions 38.

With continued reference to FIG. 3, the bottom cover 36 covers a majority of the core case with the top cover 34 accordingly covering a minority of the core case. Both the top cover 34 and the bottom cover 36 include an interface that nests the top cover 34 within the bottom cover 36. Other embodiments could involve nesting the bottom cover 36 within the top cover 34 or otherwise connecting the top cover 34 and bottom cover 36 using a defined interface.

Both the top cover 34 and the bottom cover 36 of the outer housing 14 include a plurality of protrusions 38, 41 extending from the outer housing 14 toward the core case 12 such that at least one protrusion 38, 41 fits between a pair of lobes 28. The protrusions 38, 41 include a protrusion hole 44 defined therein that aligns with the lobe holes 30 of the core case 12. In the current embodiment, inserting the protrusion 38 between a pair of lobes 28 allows for the core case 14 to be fixed relative to the protrusion holes 44. In some embodiments, the protrusions 38 of the top cover 34 are integrally formed as a unitary piece with the top cover 34. In some embodiments, the protrusions 41 of the bottom cover 36 are integrally formed as a unitary piece with the bottom cover 36.

In the current embodiment, contact between the lobes 28 and protrusions 38 of the outer housing 14 prevents movement of the core case in conjunction with the fastener 16. There are eight fasteners 16 for each group grouping of upper outer housing protrusions 38 and lobes 28; four are disposed in the top outer holes 35 and four are disposed in the bottom outer housing holes. In others, only the connections between the fastener 16, the lobe holes 30, and protrusion holes 44 serve to fix the core case 12 within the housing 14. The fastener 16 extends through the surface of outer housing 46, the lobes 28 of the core case 12, and the protrusions. In some embodiments, the fastener 16 may extend beyond the lobe holes 30 and the protrusion holes 44.

In some embodiments, the space between a pair of lobes 28 may not be filled by a single protrusion 38. Instead, a set of multiple protrusions 38 could occupy a portion of the space available. In yet another embodiment, the lobes 28 could extend between the surface of outer housing 46 and a projection 38.

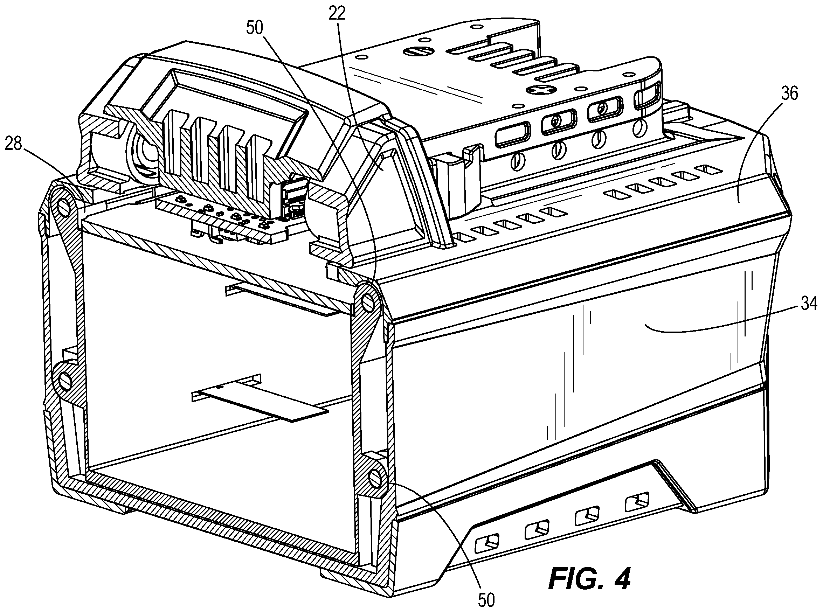

Referring to FIG. 4, the lobes 28 could also define an outermost surface 50 mountable by the top cover 34 and bottom cover 36 respectively, allowing the core case 12 to be aligned within the outer housing 14 without the fastener 16. The interface would not have to be a press fit, as the fastener 16 could still be used to fix it in place. In the present embodiment, the core case 12 has an upper and lower set of lobes 28. Both are partially enclosed below the release button 22.

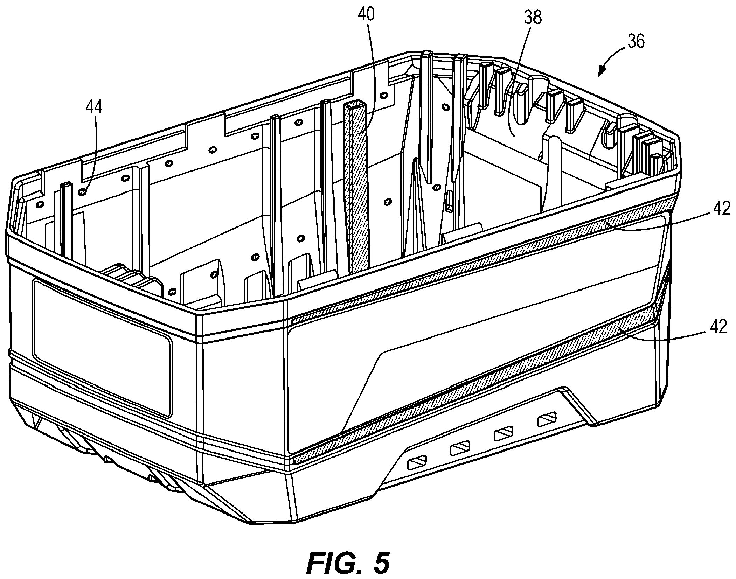

With reference to FIG. 5, the bottom cover 36 includes a rectangular base 38, a bar 40 integrally formed on the cavity facing side of the base 38 as one piece, and an at least one band 42 molded onto the base on the opposite side of the bar 40. Stated another way, a bar 40 is molded on an inner surface of the base 38 opposite to a band 42 molded on an outer surface of the base 38. The band 42 further includes multiple projections 44 that extend into the cavity facing sides of the base 38. The band 42 and bar 40 are physically connected within the base 38 and are each composed of a different material than the base 38. The band 42 and the bar 40 could serve as an interface to contact and align the core case 12 supported within the bottom cover 36.

When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A battery pack comprising:
   a core case defining an interior cavity for receiving a plurality of cells, the core case including at least two lobes, each lobe projecting outwardly away from the interior cavity;
   an outer housing surrounding the core case and mounted to the core case, the outer housing including an inward-facing protrusion disposed between the two lobes; and
   a fastener extending through two lobes and the inward-facing protrusion.
2. The battery pack of clause 1, wherein each the lobes of the core case defines a hole receiving the fastener therethrough.
3. The battery pack of clause 2, wherein the outer housing defines a hole receiving the fastener therethrough.
4. The battery pack of clause 3, wherein the hole defined in the outer housing is concentric with the holes of two lobes.
5. The battery pack of clause 1, wherein the outer housing further includes another inward-facing protrusion disposed between the two lobes.
6. The battery pack of clause 1, wherein the outer housing further includes a guide rail, the guide rail configured to mount the battery pack to an electric device.
7. The battery pack of clause 6, wherein the fastener extends parallel to the guide rail.
8. The battery pack of clause 1, wherein the outer housing includes a top cover and bottom cover coupled together.
9. The battery pack of clause 8, wherein the top cover of the outer housing partially extends over a side of the core case.
10. A battery pack comprising:
   a core case defining an interior cavity for receiving a plurality of cells, the core case including a lobe projecting outwardly away from the interior cavity, the lobe including a hole defined therein;
   an outer housing surrounding the core case and mounted to the core case, the outer housing including:
      an inward-facing protrusion including a hole defined therein, the hole of the protrusion aligned with the hole of the lobe, and
      a guide rail for mounting the battery pack to an electric device; and
   a fastener extending through the hole of the protrusion and the hole of the lobe in a direction along the guide rail.
11. The battery pack of clause 10, wherein the core case includes a plurality of lobes projecting away from the interior cavity.
12. The battery pack of clause 10, wherein the outer housing further includes an additional inward-facing protrusion including a hole defined therein aligned with the hole of the lobe.
13. The battery pack of clause 10, wherein
   the core case further includes a second lobe projecting outwardly away from the interior cavity, and
   the outer housing further includes another inward-facing protrusion disposed between the lobe and the second lobe.
14. The battery pack of clause 10, wherein the lobe is formed as a unitary piece of the core case.
15. The battery pack of clause 14, wherein the inward-facing protrusion is formed as a unitary piece of the outer housing.
16. The battery pack of clause 10, wherein
   the outer housing includes a top cover,
   the top cover includes the inward-facing protrusion, the inward-facing protrusion being a top inward-facing protrusion, and
   the lobe is a top lobe of the core case.
17. The battery pack of clause 16, wherein
   the outer housing further includes a bottom cover,
   the bottom cover including a bottom inward-facing protrusion, including a bottom hole defined therein, and
   the core case further including a bottom lobe projecting outwardly away from the interior cavity, the bottom lobe including a bottom hole defined therein.
18. The battery pack of clause 17, wherein the bottom cover extends over a majority of a height of the core case.
19. The battery pack of clause 18, wherein the fastener extends transverse to the height of the core case.
20. A battery pack comprising:
   an outer housing defining a base having an outer surface and an inner surface, the outer house including a first material;
   a band molded into the outer surface of the base, the band including a plurality of projections formed on the inner surface; and
   a bar formed onto the inner surface of the base, the bar integrally formed with the band;
   wherein the band and the bar includes a second material, the second material different than the first material.

## Claims

1. A battery pack comprising:
a core case defining an interior cavity for receiving a plurality of cells, the core case including at least two lobes, each lobe projecting outwardly away from the interior cavity;
an outer housing surrounding the core case and mounted to the core case, the outer housing including an inward-facing protrusion disposed between the two lobes; and
a fastener extending through two lobes and the inward-facing protrusion.

2. The battery pack of claim 1, wherein each the lobes of the core case defines a hole receiving the fastener therethrough.

3. The battery pack of claim 2, wherein the outer housing defines a hole receiving the fastener therethrough, preferably wherein the hole defined in the outer housing is concentric with the holes of two lobes.

4. The battery pack of any preceding claim, wherein the outer housing further includes another inward-facing protrusion disposed between the two lobes, and/or wherein the outer housing further includes a guide rail, the guide rail configured to mount the battery pack to an electric device.

5. The battery pack of claim 4, wherein the fastener extends parallel to the guide rail.

6. The battery pack of any preceding claim, wherein the outer housing includes a top cover and bottom cover coupled together, preferably wherein the top cover of the outer housing partially extends over a side of the core case.

7. A battery pack comprising:
a core case defining an interior cavity for receiving a plurality of cells, the core case including a lobe projecting outwardly away from the interior cavity, the lobe including a hole defined therein;
an outer housing surrounding the core case and mounted to the core case, the outer housing including:
an inward-facing protrusion including a hole defined therein, the hole of the protrusion aligned with the hole of the lobe, and
a guide rail for mounting the battery pack to an electric device; and
a fastener extending through the hole of the protrusion and the hole of the lobe in a direction along the guide rail.

8. The battery pack of claim 7, wherein the core case includes a plurality of lobes projecting away from the interior cavity, and/or wherein the outer housing further includes an additional inward-facing protrusion including a hole defined therein aligned with the hole of the lobe.

9. The battery pack of claim 7 or 8, wherein
the core case further includes a second lobe projecting outwardly away from the interior cavity, and
the outer housing further includes another inward-facing protrusion disposed between the lobe and the second lobe.

10. The battery pack of claim 7, 8 or 9, wherein the lobe is formed as a unitary piece of the core case.

11. The battery pack of any one of claims 7 to 10, wherein the inward-facing protrusion is formed as a unitary piece of the outer housing.

12. The battery pack of any one of claims 7 to 11, wherein
the outer housing includes a top cover,
the top cover includes the inward-facing protrusion, the inward-facing protrusion being a top inward-facing protrusion, and
the lobe is a top lobe of the core case.

13. The battery pack of claim 12, wherein
the outer housing further includes a bottom cover,
the bottom cover including a bottom inward-facing protrusion, including a bottom hole defined therein, and
the core case further including a bottom lobe projecting outwardly away from the interior cavity, the bottom lobe including a bottom hole defined therein.

14. The battery pack of claim 13, wherein the bottom cover extends over a majority of a height of the core case, and/or wherein the fastener extends transverse to the height of the core case.

15. A battery pack comprising:
an outer housing defining a base having an outer surface and an inner surface, the outer house including a first material;
a band molded into the outer surface of the base, the band including a plurality of projections formed on the inner surface; and
a bar formed onto the inner surface of the base, the bar integrally formed with the band;
wherein the band and the bar includes a second material, the second material different than the first material.
